# EUROPEAN PATENT SPECIFICATION

(11) **EP 1 687 923 B1**
(45) Date of publication and mention of the grant of the patent: **12.12.2007**
(21) Application number: 04796725.2
(22) Date of filing: 29.10.2004
(51) Int. Cl.: H04L 1/00, H04B 7/005

(54) **POWER-BASED RATE ADAPTATION OF WIRELESS COMMUNICATION CHANNELS**
LEISTUNGSBASIERTE RATENANPASSUNG DRAHTLOSER KOMMUNIKATIONSKANÄLE
ADAPTATION DE DEBIT DES CANAUX DE COMMUNICATION SANS FIL SELON LA PUISSANCE

(30) Priority: 25.11.2003 US 721951; 10.06.2004 US 865154
(43) Date of publication of application: 09.08.2006
(73) Proprietor: TELEFONAKTIEBOLAGET LM ERICSSON (publ), 164 83 Stockholm (SE)
(72) Inventor: DUAN, Long, San Diego, CA 92129 (US); SAVAS, Alpaslan, San Diego, CA 92126 (US); CHEN, Wanshi, San Diego, CA 92122 (US); SHAHIDI, Reza, SE/San Diego, CA 92310 (US); HULTEN, Joakim, San Diego, CA 92121-5775 (US)
(74) Representative: Hoffmann, Klaus
(86) International application number: PCT/US2004/035969
(87) International publication number: WO 2005/055504

(56) References cited:
- EP-A- 1 309 106
- US-A1- 2002 082 039

## Description

### BACKGROUND OF THE INVENTION

The present invention generally relates to a method of managing a wireless communication network channel and to a radio base station for use in a wireless communication network. A method and radio base station of this kind is known from EP-A-1 309106. The present invention particularly relates to adaptive rate control of communication channels in such networks.

Evolving wireless communication networks, such as those based on the IS-2000 family of standards, offer a wide range of services including voice, data (web, email, etc.), and streaming media services. Differing applications and Quality of Service (QoS) requirements result in individual data users having differing data rate needs. IS-2000 networks typically serve individual data users on the forward link using forward link fundamental channels (F-FCHs) that support a maximum channel data rate of 9.6 kpbs. If that data rate is insufficient to meet the service requirements of a particular data user, the network assigns a forward supplemental channel (F-SCH) in conjunction with that user's F-FCH. F-SCHs are configured to have data rates expressed as a multiple of the F-FCH data rate, and thus a data user may be assigned a F-SCH rate of 1x, 2x, 4x, etc., depending on the particular service needs of that user.

Typically, the assignment of a F-SCH to a particular data user is triggered by an excess data buffer size, i.e., the queue for incoming data to be transmitted to the user is too large, or is triggered by the rate of the incoming data. Selection of a F-SCH initial date rate may be based on the predicted data throughput to the data user, or may be based on other considerations. Regardless, once the F-SCH is assigned, conventional networks either leave the initially configured rate unchanged for the duration of the assignment, or make relatively infrequent rate changes based on, for example, changes in the incoming forward link traffic (i.e., packet size or rate). In theory, the network could use frame error rate (FER) information fed back from the data user to make rate adjustments, but that would not allow timely rate adjustments because relatively long periods of time, e.g., a hundred or more received frames, are required to develop statistically accurate FER information.

Overall network performance and efficiency suffer because of the inability to intelligently adjust F-SCH data rates. That is, where the data rate of a given F-SCH is too high given the current radio conditions of the data user the channel is assigned to, the effective data rate of the channel is lowered because of the high incidence of reception errors and the transmit power allocated for the inappropriately high data rate is at least partially wasted. Of course, the converse is true, wherein the network misses opportunities to make timely increases in F-SCH data rates responsive to improving radio conditions for particular data users.

These circumstances are not limited to IS-2000 networks. Indeed, the potential for such inefficiencies arise in any communication network wherein rate-adjustable channels are assigned to users and managed without benefit of direct rate control feedback from the users.

### SUMMARY OF THE INVENTION

The present invention comprises a method and apparatus as defined in claims 1 and 21, respectively, to provide communication channel rate adaptation in a wireless communication network, such as in cdma2000 or Wideband CDMA (WCDMA) cellular communication networks. In an exemplary embodiment, the present invention comprises a method of channel data rate adaptation in a wireless communication network based on setting a data rate for a communication channel to be used for transmitting data to a remote receiver at a variable transmit power that is controlled upward and downward by the remote receiver as needed to achieve a desired received data quality at the remote receiver, monitoring transmit power information for the communication channel as an indication of current radio conditions at the remote receiver, and changing the data rate for the communication channel based on the transmit power information.

In an exemplary embodiment of the above method, the communication channel is a rate-adjustable data channel, such as a F-SCH transmitted from a radio base station to a remote mobile station. The radio base station has knowledge of the transmit power being used to transmit data to the mobile station on the channel, and thus can monitor that transmit power as an indication of radio conditions at the mobile station. For example, where the transmit power is on average close to an upper power limit set for the channel, the radio base station infers that the current data rate of the channel is too high. Conversely, where the transmit power is on average close to a lower power limit set for the channel the radio base station infers that the current data rate of the channel is too low. In the former case, the radio base station initiates a downward rate change for the channel and, in the latter case it initiates an upward rate change for the channel.

More generally, the radio base station compares the transmit power information to rate adjustment thresholds that trigger up or down rate adjustments if the thresholds are met or exceeded. For example, the comparison of average transmit power to a threshold set relative to a power requirement associated with a higher data rate may trigger an upward rate adjustment if the comparison indicates that there is sufficient power margin for reliable operation at the higher data rate. Thus, the upward rate adjustment threshold may be set in relation to the upper power bound of the next higher data rate.

An exemplary radio base station comprises transmitter circuits to transmit radio signals on one or more forward link communication channels to mobile stations; and a forward link processing circuit to control the transmitter circuits. Exemplary forward link processing circuits are configured to set a data rate for a communication channel to be used for transmitting data to a mobile station at a variable transmit power that is controlled upward and downward by the mobile station as needed to achieve a desired received data quality at the mobile station. These circuits include a rate adaptor circuit that is configured to monitor transmit power information for the communication channel as an indication of current radio conditions at the mobile station, and change the data rate for the communication channel based on the transmit power information.

By way of non-limiting examples, the transmit power information monitored by the radio base station for a given communication channel of interest may comprise an average of the actual transmit power being used to transmit data on the channel. For example, the base station may filter (smooth) power values over a given number of transmit frames, and it may apply different filters such that it makes downward rate adjustments more quickly than it makes upward rate adjustments. Alternatively or additionally, the base station may monitor forward link power control commands (bits) from the mobile station. For example, if a large percentage of those commands are up commands, the base station infers that the channel data rate is too high for current radio conditions at the mobile station: Conversely, if a large percentage of the commands are down commands, it infers that the mobile station could support a higher data rate.

While the present invention may have particular applicability to rate adaptation for forward link supplemental channels in cdma2000 networks, it is not limited to such networks. Further, those skilled in the art will recognize additional features and advantages in light of the following detailed discussion and the accompanying figures.

### BRIEF DESCRIPTION OF THE DRAWINGS

Fig. 1 is a diagram of an exemplary wireless communication network according to an embodiment of the present invention.
Fig. 2 is a diagram of an exemplary radio base station.
Fig. 3 is a diagram of typical per-frame transmit power variations for a given communication channel of interest.
Fig. 4 is diagram of typical forward link power control commands as might be returned to a network radio base station from a particular mobile station.
Fig. 5 is a diagram of exemplary filters to transmit power information for rate adaptation monitoring.
Fig. 6 is a diagram of first and second filtered values illustrating the use of different, e.g., fast and slow, filter time constants for rate adaptation monitoring.
Fig. 7 is a diagram of exemplary processing logic for rate adaptation according to an embodiment of the present invention.

### DETAILED DESCRIPTION OF THE INVENTION

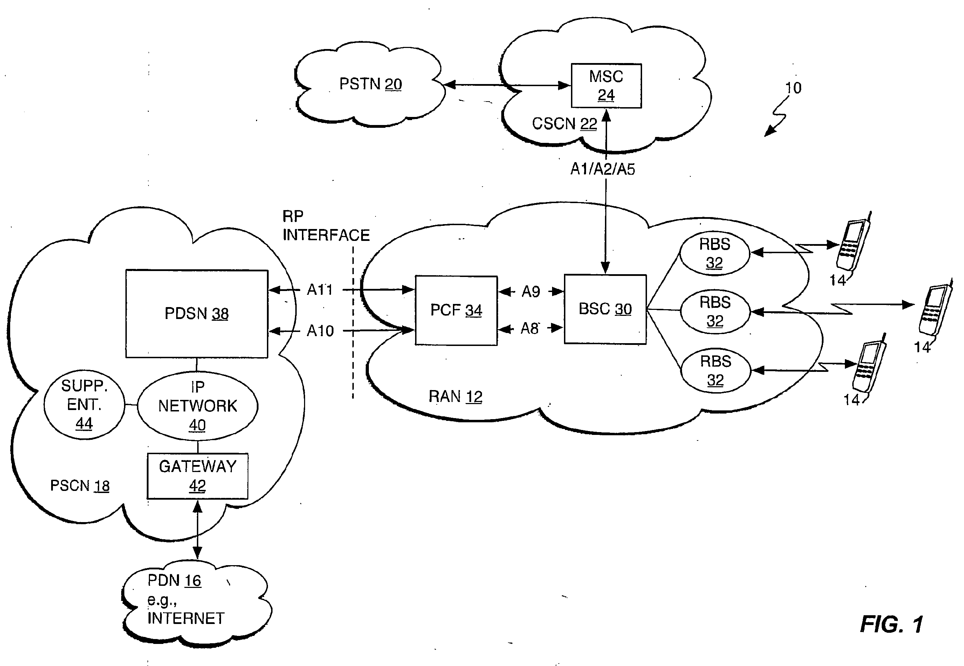

Fig. 1 illustrates an exemplary wireless communication network 10 that generally may be configured according to known communication standards. For example, network 10 may comprise a cdma2000 network based on IS-2000/2001 standards. It should be understood that network 10 also could be configured according to other standards as needed or desired, including Wideband (WCDMA) standards, for example.

Regardless, network 10 comprises a Radio Access Network (RAN) 12 that supports wireless communication between mobile stations 14 and one or more Public Data Networks (PDNs) 16, such as the Internet, based on its Radio-Packet (RP) interface with Packet Switched Core Network (PSCN) 18. RAN 12 also may be configured to carry voice and other circuit-switched communication traffic between the mobile stations 14 and users of the Public Switched Telephone Network (PSTN) 20 based on its traffic and signaling interfaces with Circuit-Switched Core Network (CSCN) 22, which typically includes a Mobile Switching Center (MSC) 24 to handle voice call setup/teardown, etc.

In any case, an exemplary RAN 12 comprises one or more Base Station Controllers (BSCs) 30, each one associated with one or more Radio Base Stations (RBSs) 32. A Packet Control Function (PCF) 34 is associated (or integrated) with each BSC 30, and provides an interface to a Packet Data Serving Node (PDSN) 38 in the PSCN 18. PDSN 38 carries packet data traffic for mobile stations 16, and may be coupled through a local (private) IP network 40 to a gateway router 42 that provides access to the Internet at large, or to one or more other PDNs 16. The PSCN 18 may comprise various other entities 44, such as Home Agents and Foreign Agents to manage packet data mobility functions.

While potentially helpful in terms of understanding exemplary network operations in a broad sense, details of the CSCN 16 and PSCN 18 are not required for understanding the present invention, which generally concerns operations and equipment in RAN 12, and, in particular, concerns RBSs 32 and BSCs 30.

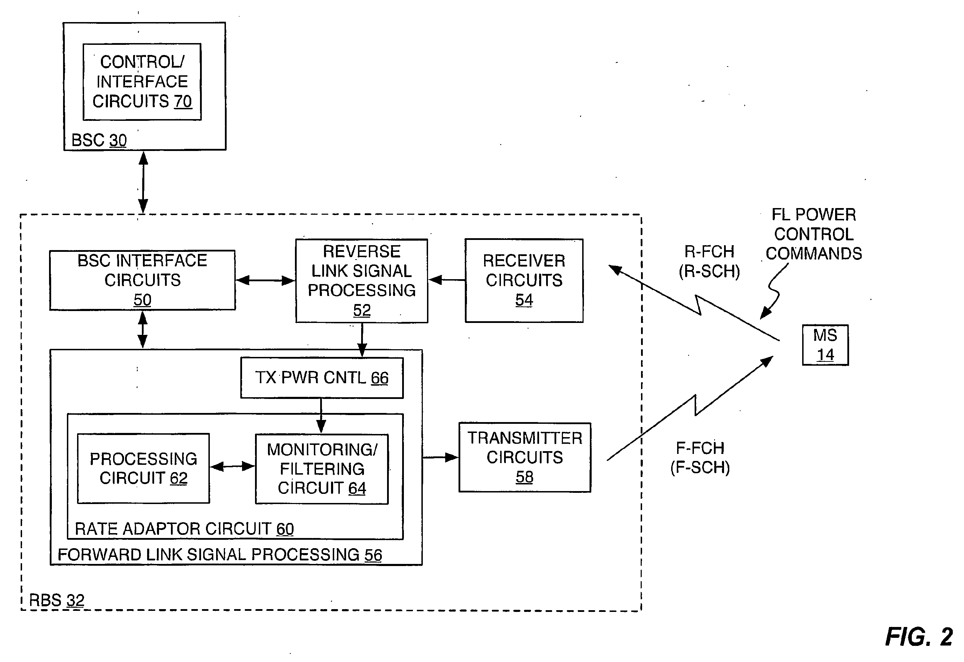

Turning, then, to exemplary details for an RBS 32 configured according to one or more embodiments of the present invention, Fig. 2 illustrates that RBS 32 functionally comprises BSC interface circuits 50, reverse link signal processing circuits 52 and associated receiver circuits 54, forward link signal processing circuits 56 and associated transmitter circuits 58. Forward link signal processing circuits 56 comprise a rate adaptor circuit 60 that includes a processing circuit 62 and one or more monitoring/filtering circuits 64, which may be integrated with the processing circuit 62. A forward link (transmit) power control circuit 66 may be associated with, or included in, the forward link signal processing circuits 56.

These various functional elements can be implemented in hardware, software, or both, and the exemplary RBS 32 includes one or more microprocessor circuits, such as Digital Signal Processors (DSPs), and associated supporting circuits, such as memory, etc. As such, in an exemplary embodiment, the present invention, including rate adapator circuit 60, is implemented at least in part as a computer program stored in memory for execution in one or more RBS microprocessor circuits.

RBS 32 supports wireless communication to and from individual ones of the mobile stations 14 by transmitting signals to the mobile stations 14 using one or more forward link channels and receiving signals from the mobile stations 14 using one or more reverse link channels. In an exemplary embodiment, each mobile station 14 is served using one or more dedicated (mobile-specific) forward and reverse link channels.

Power control loops on the forward and reverse links operate to maintain the forward and reverse link channel transmit powers substantially at, but preferably not higher than, the levels needed to achieve a desired received signal level quality at both the RBS 32 and at the mobile stations 14. For example, for a particular mobile station 14, the RBS 32 sends reverse link power control commands at a defined rate to the mobile station 14, and mobile station 14 moves its transmit power up or down according to the commands. Thus, if the RBS 32 is receiving the mobile station's reverse link signals below a targeted signal-to-noise ratio, it sends up commands to the mobile station and, conversely, if it is receiving the mobile station's signal above the targeted signal quality, it sends down commands. According to this scheme, then, the transmit power from the mobile station 14 moves up and down as needed to achieve the desired signal quality at the RBS 32.

Similarly, the mobile station 14 sends forward link power control commands, e.g., Power Control Bits or PCBs, to the RBS 32 that command the RBS 32 to increase or decrease its transmit power to the mobile station 14 according to a desired received signal quality at the mobile station 14. For example, the mobile station 14 may compute a target received signal quality and then send up or down power commands to RBS 32 as needed to maintain the received signal quality at or around that target. Along with this, the mobile station 14 may monitor a Frame Error Rate (FER) for data received from the RBS 32 and may raise or lower the received signal quality target depending on whether the FER is high or low.

Link power control of this nature generally is well understood by those skilled in the art, however, according to the present invention, transmit power information associated with such closed loop power control is used to make channel data rate adaptations. For example, in the context of F-SCHs in cdma2000 networks, the present invention may be used to provide dynamic rate adaptation for a given F-SCH based on the transmit power of that F-SCH. More broadly, the present invention provides a relatively fast, e.g., per transmit frame or better, methodology for performing channel rate adaptation based on transmit power information. According to a broad embodiment, a relatively high transmit power indicates that the channel data rate should be adapted downward and a relatively low transmit power indicates that the channel data rate should be adapted upward. As such, the present invention can be applied to essentially any communication channel that is rate adjustable. Such application may be particular beneficial where the channel in question lacks an explicit rate control feedback mechanism keyed to received signal quality at the remote receiver.

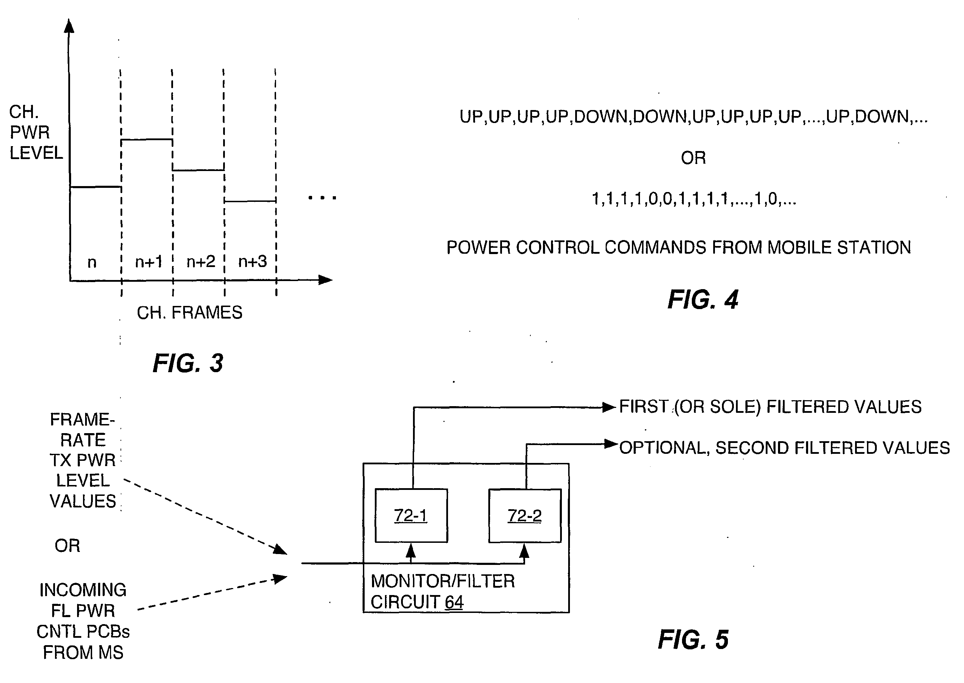

As an example, Fig. 3 illustrates the changing transmit powers used by RBS 32 for the transmission of data to a particular mobile station 14 on a F-SCH assigned to that mobile station 14. In general, the transmit power required for a F-SCH depends on its configured data rate, the path loss on the forward link, and the interference at the remote receiver, i.e., at the targeted mobile station 14. Broadly, then, the required transmit power is a function of channel data rate and overall radio conditions. As shown in the illustration, the required transmit power varies over time-four frames are illustrated-as a function of changing radio conditions.

Fig. 4 illustrates a typical stream of up/down power control commands as might be sent by the mobile station 14 to the RBS 32 to control the forward link transmission power used by the RBS 32 to transmit to the mobile station 14. For example, the mobile station 14 commands the RBS 32 to increase its transmit power by sending up commands if the mobile station is experiencing too many errors in the data it receives from RBS 32. Conversely, as explained above, mobile station 14 sends down power control commands to RBS 32 if the mobile station 14 is receiving data at an error rate lower than the target. Of course, in normal operation, with fast fading and other dynamic variations in radio conditions, the power control commands streamed back to the RBS 32 from the mobile station 14 comprise an ever changing mix of up and down power control commands. However, in general, the commands are predominantly up commands where the mobile station 14 is experiencing excessive received data errors, and the commands are predominantly down commands where the mobile station is experiencing relatively few data errors.

Fig. 5 illustrates an exemplary approach to transmit power information monitoring that may be adopted by the RBS 32 of Fig. 3 for rate adaptation of a particular forward link channel of interest, wherein the actual transmit power being used for the channel is monitored, or the incoming power control commands from the targeted mobile station are monitored. Thus, in a first exemplary embodiment, the rate adaptor circuit 60 dynamically adapts the data rate of a particular F-SCH up or down based on monitoring the actual transmit power being used to transmit on the channel. Alternatively, the rate adaptor circuit 60 dynamically adapts the rate based on the power control commands returned by the mobile station 14.

In either case, the monitor/filter circuits 64 may comprise one or more filter circuits 72. In an exemplary embodiment, the raw power data (either values corresponding to the transmit power or to the incoming stream of power control commands) is routed into a first filter 72-1 that is configured with a first filter time constant to effect a desired amount of filtering. Optionally, the data also is routed into a second filter 72-2 that is configured with a second filter time constant to effect a desired amount of smoothing. In one configuration, the first filter time constant is set less than the second filter time constant such that the first filtered values output by filter 72-1 more rapidly track changes in the pre-filtered data, while the second filtered values output by filter 72-2 exhibit a greater degree of smoothing.

It may be desirable, for example, to make downward rate adjustments more quickly than upward rate adjustments. Thus, downward rate adjustment decisions may be made based on monitoring the first filtered values relative to defined thresholds, and upward rate adjustments may be made based on monitoring the second filtered values relative to the same or different thresholds.

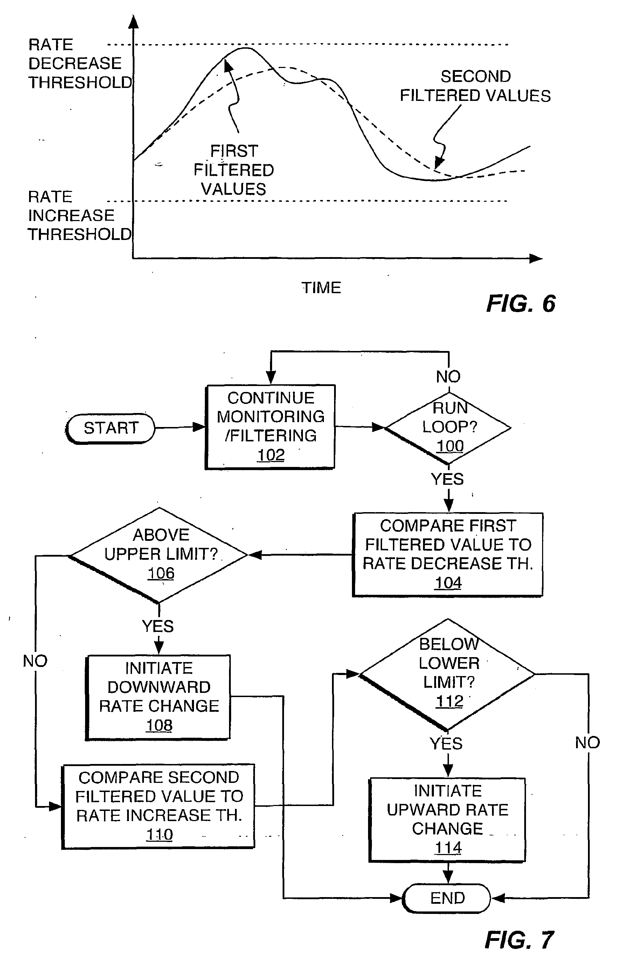

Fig. 6 illustrates such an embodiment, and one sees that that the second filtered values exhibit greater smoothing, i.e., a longer filter time constant, than the first filtered values. Further, one sees that both sets of filtered values change over time relative to defined upper and lower limits. If the filtered values are derived from the actual channel transmit power, then the upper and lower limits can be set at the minimum and maximum powers defined for the channel. Transmit power control circuits 66 that provide forward link transmit power for the individual communication channels can be configured to provide the rate adaptor circuit 60 with the transmit power information for any number of channels subject to rate adaptation according to the present invention.

If the filtered values used for rate adaptation are derived from the mobile station's power control commands, then the upper and lower limits can be set at percentage or fractional values. For example, if a "0" defines a down power command and a "1" defines an up power command, then the filtered values will range from a minimum of zero (all "0s" received) to a maximum of one (all "1s" received). A value of about 0.5 would represent a more or less even mix of up and down commands. Thus, the lower limit could be set at 0.25 and the upper limit could be set at 0.75. The lower limit would be reached if the larger percentage of power control commands incoming from the mobile station 14 were down commands, and the upper limit would be reached if the larger percentage were up commands. Of course, those skilled in the art will recognize that these are merely example limits that can be changed as needed or desired.

Additionally, those skilled in the art will recognize the opportunity to vary the filtering process as needed or desired. In an exemplary embodiment, the filter characteristics may be configured to achieve a desired averaging response. Filter performance may be adjusted by configuring the number of transmit frames over which the transmit information is developed, i.e., the number of transmit frames over which the average is determined. In an exemplary embodiment, new transmit power information is available per 20 ms frame. Similarly, in embodiments that derive transmit power information from the incoming power control commands, filter performance can be adjusted by changing the number of commands that are averaged. Incoming power control commands are received at up to 800 Hz (every 1.25 ms), and averaging operations can be configured to balance smoothness with responsiveness.

Further, regardless of filter configuration, it may be desirable to "reset" filtering after a rate increase or decrease. Such filter resetting helps prevent false retriggering of the rate adaption method immediately after a rate change. As an exemple, the method may include resetting the transmit power information to half the last filtered power value determined prior to a rate decrease, or to double the last value determined prior to a rate increase. Of course, other reset values can be used and, if separate filters are used for triggering rate increases and decreases, reset operations may be tailored to each individual filter.

Regardless, Fig. 7 illustrates exemplary rate adaptation processing. In general, processing comprises ongoing transmit power information monitoring (Step 100) wherein the desired transmit power information is filtered (using one or more filters as needed or desired) for use in rate adaptation. Rate adaptation may be run at essentially any rate desired, depending on the availability of transmit power information. For example, in cdma2000 networks, frame transmit power data is available on a per frame rate, e.g., every twenty milliseconds. Thus, twenty milliseconds represent an exemplary rate adjustment interval for F-SCH rate adaptation. Power control commands returned from the mobile station 14 are available at up to 800 Hz, and even with filtering the use of these power control commands supports a per-frame or better rate adaptation interval.

Thus, if it is time for rate adaptation for a given channel or channels of interest (Step 102), the rate adaptor 60 compares the first filtered value against the upper limit (Step 104). If the first filtered value is above the upper limit (Step 106), rate adaptor 60 initiates a downward rate adjustment (Step 108). If not, the rate adaptor 60 compares the second filtered value to the lower limit (Step 110). If the second filtered value is below the lower limit, the rate adaptor 60 initiates an upward rate adjustment (Step 112). If the first and second values are between the upper and lower limits, no rate adjustments are made. Processing ends with respect to the current rate adjustment interval, but it should be understood that monitoring can continue and that the above process can be repeated at the desired adjustment interval or as needed.

As an exemplary alternative to comparing filtered transmit power values to a lower power bound set relative to a current channel data rate, the rate adaptor 60 generally may compare the filtered value to a threshold derived from the power requirements of a higher data rate. For example, the filtered value may be compared to a threshold set relative to an upper power bound associated with the next higher data rate. By making that comparison, the rate adaptor 60 ensures that a sufficient power margin will exist to maintain the integrity of the call at the contemplated higher rate in consideration of normal power fluctuations. As an example, suppose that the current channel is at a rate 4x and the next higher rate is 8x. In determining whether to move from 4x to 8x, the rate adaptor 60 compares the filtered value to threshold associated with the maximum power defined for the 8x rate to determine whether to initiate the rate increase.

More generally, the rate adaptor 60 can determine whether to increase the data rate by making the comparison to a threshold that will ensure sufficient power adjustment range to maintain radio link quality at the contemplated higher rate. The comparison threshold thus should be set relative to the upper power bound defined for the contemplated data rate to allow for reasonable margin.

In initiating a rate adjustment, the rate adaptor circuit 60 may send a rate adjustment message to the BSC 30, or otherwise signal to the BSC 30 that a rate adjustment is needed. The control/interface circuits 70 of BSC 30 can be configured to respond to such signaling by sending an Extended Supplemental Channel Assignment Message (ESCAM) to the mobile station 14 to cancel the previous rate assignment of the mobile station's F-SCH and to inform the RBS 32 of the rate change so that it can reconfigure the rate accordingly..

Thus, in an exemplary embodiment directed to F-SCH rate adaptation in a cdma2000 network, RBS 32 can be configured to perform rate adaptation on any number of F-SCHs being supported by the RBS 32. For any of these channels, the RBS 32 initiates downward rate adjustments as needed in response to determining that the transmit power information for that channel indicates that a relatively higher power is required to support the current data rate of the channel. Conversely, the RBS 32 initiates upward rate adjustments as needed in response to determining that a relatively lower power is required to support the current data rate of the channel, or that the current average power is such that the next higher data rate could be supported with sufficient power margin. So configured, the RBS 32 uses transmit power information to infer whether a particular mobile station 14 is in relatively good or relatively bad radio conditions, and to make the correspondingly appropriate rate adaptation.

As noted, the present invention has particular applicability to F-SCH rate adaptation in cdma2000 networks, but those skilled in the art will recognize that the present invention can be applied to essentially any type of channel in any type of network where adaptive rate control is desired, and where transmit power information for the channel varies as a function of received signal quality at the targeted receiver. As such, the present invention is not limited by the foregoing discussion, but rather is limited only by the following claims.

## Claims

1. A method of managing a wireless communication network channel having a variable data rate, the method comprising:
setting a data rate for a communication channel to be used for transmitting data to a remote receiver (14) at a variable transmit power, the variable transmit power of the communication channel being controlled upward and downward by the remote receiver (14) as needed based on a quality of received data for the communication channel to achieve a desired quality of received data at the remote receiver;
monitoring (102) transmit power information for the communication channel as an indication of current radio conditions at the remote receiver, wherein the transmit power information comprises power control commands sent from the remote receiver that are associated with controlling the transmit power of the communication channel;
comparing (104) the transmit power information against a first threshold for determining whether to initiate a data rate decrease, and (110) against a second threshold for determining whether to initiate a data rate increase; and
changing (108, 114) the data rate for the communication channel based on the comparison;
**characterized by** generating a first filtered value of the transmit power information for use in determining whether to initiate a downward data rate change and generating a second filtered value of the transmit power information for use in determining whether to initiate an upward data rate change, and further comprising using a longer filter time constant to generate the second filtered value as compared to the first filtered value.

2. The method of claim 1, wherein setting a data rate for a communication channel to be used for transmitting data to a remote receiver at a variable transmit power comprises setting the data rate of the communication channel assigned to the remote receiver to a desired data rate.

3. The method of claim 1, wherein the transmit power information comprises a transmit power for the communication channel, and wherein monitoring transmit power information for the communication channel as an indication of current radio conditions at the remote receiver comprises generating one or more filtered values of the transmit power and monitoring the one or more filtered values as an indication of the current radio conditions at the remote receiver.

4. The method of claim 3, wherein changing the data rate for the communication channel based on the comparison comprises initiating a downward rate change if one of the one or more filtered values approaches the first threshold, and initiating an upward data rate change if one of the one or more filtered values approaches the second threshold.

5. The method of claim 1, wherein the second threshold comprises a threshold set relative to an upper power bound associated with a higher data rate, such that a change to that higher data rate is not initiated unless the comparison indicates that a desired power margin would exist if the data rate is increased to the higher data rate.

6. The method of claim 1, wherein the transmit power information comprises an average of a transmit power for the communication channel, wherein monitoring transmit power information for the communication channel as an indication of current radio conditions at the remote receiver comprises comparing (106, 112) the average transmit power used for transmission of data on the communication channel to the first and second thresholds, and wherein a high average power indicates relatively poor current radio conditions at the remote terminal (14) and wherein a low average power indicates relatively good current radio conditions at the remote terminal (14).

7. The method of claim 1, further comprising updating the transmit power information according to a defined transmission frame timing associated with the communication channel.

8. The method of claim 7, wherein updating the transmit power information according to a defined transmission frame timing associated with the oommunication channel comprises updating the transmit power information on at least a per frame basis.

9. The method of claim 1, wherein monitoring transmit power information for the communication channel as an indication of current radio conditions at the remote receiver (14) comprises monitoring the power control commands.

10. The method of claim 9, wherein monitoring the power control commands comprises generating one or more filtered values of the power control commands and determining whether the one or more filtered values indicate predominantly up commands or indicate predominantly down commands.

11. The method of claim 9, wherein changing the data rate for the communication channel based on the comparison comprises initiating a downward data rate change if the one or more filtered values indicate predominantly up commands.

12. The method of claim 9, wherein changing the data rate for the communication channel based on the comparison comprises initiating an upward data rate change if the one or more filtered values indicate predominantly down commands.

13. The method of claim 9, wherein generating one or more filtered values of the power control commands and determining whether the one or more filtered values indicate predominantly up commands or predominantly down commands comprises generating a first filtered value according to a first filter time constant and generating a second filtered value according to a second filter time constant, and basing the determination of downward data rate changes on the first filtered value and basing the determination of upward data rate changes on the second filtered value.

14. The method of claim 1, wherein the network (12) comprises a cdma2000 network and the communication channel comprises a forward link supplemental channel (F-SCH) at a radio base station (32) in the network (12) to be used for serving a particular mobile station (14), and wherein changing the data rate for the communication channel based on the transmit power information comprises sending a data rate change request for the forward link supplemental channel from the radio base station (32) to an associated base station controller (30).

15. The method of claim 14, further comprising sending an extended supplemental channel assignment message from the base station controller (30) for transmission to the remote receiver (14) to inform the remote receiver (14) of a change in a current data rate assignment of the forward link supplemental channel.

16. The method of claim 1, wherein the transmit power information comprises a transmit power for the communication channel, and wherein monitoring transmit power information for the communication channel as an indication of current radio conditions at the remote receiver (14) comprises maintaining one or more filtered values indicative of the transmit power.

17. The method of claim 16, wherein changing the data rate for the communication channel based on the comparison comprises comparing the one or more filtered values to at least one of the first and second thresholds to determine whether a rate change is warranted.

18. The method of claim 17, further comprising resetting at least one of the one or more filtered values responsive to initiating a data rate increase or a data rate decrease.

19. The method of claim 18, further comprising, after initiating a data rate increase based on a filtered value, resetting the filtered value to be greater than it was before the data rate increase was initiated.

20. The method of claim 18, further comprising, after initiating a data rate decrease based on a filtered value, resetting the filtered value to be less than it was before the data rate decrease was initiated.

21. A radio base station (32) for use in a wireless communication network (12), comprising: transmitter circuits (58) to transmit radio signals on one or more forward link communication channels to mobile stations (14); and
a forward link processing circuit (56) to control the transmitter circuits (58);
said forward link processing circuit (56) configured to set a data rate for a communication channel to be used for transmitting data to a mobile station (14) at a variable transmit power, the variable transmit power of the communication channel being controlled upward and downward by the mobile station (14) as needed based on a quality of received data for the communication channel to achieve a desired quality of received data at the mobile station (14); and
said forward link processing circuit (56) comprising a rate adaptor circuit (60) configured to:
monitor transmit power information for the communication channel as an indication of current radio conditions at the mobile station (14), wherein the transmit power information comprises power control commands sent from the remote receiver that are associated with controlling the transmit power of the communication channel;
compare the transmit power information against a first threshold for determining whether to initiate a data rate decrease, and against a second threshold for determining whether to initiate a data rate increase; and
change the data rate for the communication channel based on the comparison;
**characterized by** the rate adapter circuit (60) being configured to generate a first filtered value of the transmit power information according to a first filter time constant for use in determining whether to initiate a downward data rate change and generate a second filtered value of the transmit power information according to a second, longer filter time constant for use in determining whether to initiate an upward data rate change.

22. The radio base station (32) of claim 21, wherein the radio base station (32) is configured to set the data rate for the communication channel to a desired value and the rate adaptor circuit (60) is configured to adapt the data rate as needed based on monitoring the transmit power information.

23. The radio base station (32) of claim 21, wherein the rate adaptor circuit (60) comprises one or more filter circuits (64) to generate one or more filtered values related to transmit power for the communication channel as the transmit power information.

24. The radio base station (32) of claim 23, wherein the rate adaptor circuit (60) is configured to reset at least one of the one or more filtered values responsive to initiating a data rate increase or a data rate decrease.

25. The radio base station of claim 24, wherein, after initiating a data rate increase based on a filtered value, the rate adaptor circuit (60) is configured to reset the filtered value to be greater than it was before the data rate increase was initiated.

26. The radio base station (32) of claim 24, wherein, after initiating a data rate decrease based an a filtered value, the rate adaptor circuit (60) is configured to reset the filtered value to be less than it was before the data rate decrease was initiated.

27. The radio base station (32) of claim 23, wherein the rate adaptor circuit (60) is configured to change the data rate for the communication channel based on the transmit power information by initiating a downward data rate change if one of the one or more filtered values approaches the first threshold, and initiating an upward data rate change if one of the one or more filtered values approaches the second threshold.

28. The radio base station (32) of claim 21, wherein the transmit power information comprises a transmit power for the communication channel, wherein the rate adaptor circuit (60) comprises one or more filter circuits (64) to generate one or more filtered values of the transmit power for the communication channel, and wherein the rate adaptor circuit (60) is configured to monitor the transmit power information for the communication channel by comparing the one or more filtered values against the first and second thresholds.

29. The radio base station (32) of claim 28, wherein the rate adaptor circuit (60) is configured to set the second threshold based on a power requirement associated with a higher data rate, and is further configured to initiate a change to the higher data rate if the comparison indicates that a sufficient power margin would be maintained for the communication channel at the higher data rate.

30. The radio base station (32) of claim 21, wherein the transmit power information comprises an average transmit power for the communication channel, and wherein the rate adaptor circuit (60) is configured to monitor the transmit power information for the communication channel by comparing the average transmit power to upper and lower power limits set for the channel.

31. The radio base station (32) of claim 21, wherein the rate adaptor circuit (60) is configured to update the transmit power information according to a defined transmission frame timing associated with the communication channel.

32. The radio base station (32) of claim 31, wherein the rate adaptor circuit (60) updates the transmit power information on at least a per frame basis.

33. The radio base station (32) of claim 21, wherein the transmit power information comprises power control commands sent from the mobile station that are associated with controlling the transmit power of the communication channel, and wherein the rate adaptor circuit (60) is configured to monitor transmit power information for the communication channel by monitoring the power control commands.

34. The radio base station (32) of claim 33, wherein the rate adaptor circuit (60) is configured to determine whether a greater percentage of the power control commands are up commands or are down commands.

35. The radio base station (32) of claim 34, wherein the rate adaptor circuit (60) is configured to initiate a downward rate change if the greater percentage of the power control commands are up commands, and to initiate an upward rate change if the greater percentage of the power control commands are down commands.

36. The radio base station (32) of claim 33, wherein the rate adaptor circuit (60) is configured to filter the power control commands according to a first filter time constant to determine whether to initiate a downward rate change, and is configured to filter the power control commands according to a second, longer filter time constant to determine whether to initiate an upward rate change.

37. The radio base station (32) of claim 33, wherein the rate adaptor circuit is configured to initiate a downward rate change if the power control commands predominantly are up commands, and to initiate an upward rate change if the power control commands predominantly are down commands.

38. The radio base station of claim 21, wherein the radio base station comprises an IS-2000 radio base station for use in a cdma2000 wireless communication network, and the communication channel comprises a forward link supplemental channel (F-SCH) to be used for serving a particular mobile station, and wherein the radio base station is configured to change the data rate by sending a rate change request for the forward link supplemental channel to an associated base station controller.

39. The radio base station of claim 38, wherein the base station controller is configured to send an extended supplemental channel assignment message for transmission to the mobile station to inform the mobile station of a changed data rate assignment for the forward link supplemental channel.

## Patentansprüche

1. Ein Verfahren zum Managen eines Kanals eines drahtlosen Kommunikationsnetzes mit einer variablen Datenrate, das Verfahren umfassend:
Setzen einer Datenrate für einen Kommunikationskanal, der zu verwenden ist zum Übertragen von Daten zu einem entfernten Empfänger (14) in einer variablen Übertragungsleistung, wobei die Übertragungsleistung des Kommunikationskanals aufwärts und abwärts nach Bedarf gesteuert wird durch den entfernten Empfänger (14) basierend auf einer Qualität von empfangenen Daten für den Kommunikationskanal, um eine gewünschte Qualität von empfangenen Daten in dem entfernten Empfänger zu erreichen;
Überwachen (102) von Übertragungsleistungsinformation für den Kommunikationskanal als eine Anzeige von aktuellen Funkbedingungen in dem entfernten Empfänger, wobei die Übertragungsleistungsinformation Leistungssteuerbefehle umfasst, die von dem entfernten Empfänger gesendet werden, die mit einer Steuerung der Übertragungsleistung des Kommunikationskanals in Verbindung stehen;
Vergleichen (104) der Übertragungsleistungsinformation gegenüber einer ersten Schwelle zum Bestimmen, ob eine Datenratenverringerung zu initiieren ist, und (110) gegenüber einer zweiten Schwelle zum Bestimmen, ob eine Datenratenerhöhung zu initiieren ist; und
Ändern (108, 101) der Datenrate für den Kommunikationskanal basierend auf dem Vergleich;
**gekennzeichnet durch** Generieren eines ersten gefilterten Wertes der Übertragungsleistungsinformation zur Verwendung bei einer Bestimmung, ob eine Abwärtsdatenratenänderung zu initiieren ist, und Generieren eines zweiten gefilterten Wertes der Übertragungsleistungsinformation zur Verwendung bei einer Bestimmung, ob eine Aufwärtsdatenratenänderung zu initiieren ist, und ferner umfassend eine Verwendung einer längeren Filterzeitkonstante, um den zweiten gefilterten Wert zu generieren im Vergleich zu dem ersten gefilterten Wert

2. Das Verfahren nach Anspruch 1, wobei Setzen einer Datenrate für einen Kommunikationskanal, der zum Übertragen von Daten zu einem entfernten Empfänger in einer variablen Übertragungsleistung zu verwenden ist, umfasst Setzen der Datenrate des Kommunikationskanals, der dem entfernten Empfänger zugewiesen ist, auf eine gewünschte Datenrate.

3. Das Verfahren nach Anspruch 1, wobei die Übertragungsleistungsinformation eine Übertragungsleistung für den Kommunikationskanal umfasst, und wobei Überwachen von Übertragungsleistungsinformation für den Kommunikationskanal als eine Anzeige von aktuellen Funkbedingungen in dem entfernten Empfänger Generieren von einem oder mehr gefilterten Werten der Übertragungsleistung und Überwachen des einen oder mehr gefilterten Wertes als eine Anzeige der aktuellen Funkbedingungen in dem entfernten Empfänger umfasst.

4. Das Verfahren nach Anspruch 3, wobei Ändern der Datenrate für den Kommunikationskanal basierend auf dem Vergleich umfasst Initiieren einer Abwärtsratenänderung, falls sich einer des einen oder mehr gefilterten Wertes der ersten Schwelle annähert, und Initiieren einer Aufwärtsratenänderung, falls sich einer des einen oder mehr gefilterten Wertes der zweiten Schwelle annähert.

5. Das Verfahren nach Anspruch 1, wobei die zweite Schwelle umfasst eine Schwelle, die relativ zu einer oberen Leistungsgrenze gesetzt ist, die mit einer höheren Datenrate in Verbindung steht, derart, dass eine Änderung zu dieser höheren Datenrate nicht initiiert wird, es sei denn, der Vergleich zeigt an, dass ein gewünschter Leistungsspielraum existieren würde, falls die Datenrate zu der höheren Datenrate erhöht wird.

6. Das Verfahren nach Anspruch 1, wobei die Übertragungsleistungsinformation umfasst einen Mittelwert einer Übertragungsleistung für den Kommunikationskanal, wobei Überwachen von Übertragungsleistungsinformation für den Kommunikationskanal als eine Anzeige von aktuellen Funkbedingungen in dem entfernten Empfänger umfasst Vergleichen (106, 112) der Mittelwertübertragungsleistung, die für eine Übertragung von Daten in dem Kommunikationskanal verwendet wird, mit den ersten und zweiten Schwellen, und wobei eine hohe Mittelwertleistung relativ schlechte aktuelle Funkbedingungen in dem entfernten Endgerät (14) anzeigt, und wobei eine geringe Mittelwertleistung relativ gute aktuelle Funkbedingungen in dem entfernten Endgerät (14) anzeigt.

7. Das Verfahren nach Anspruch 1, ferner umfassend Aktualisieren der Übertragungsleistungsinformation gemäß einer definierten Übertragungsrahmen-Zeitsteuerung, die mit dem Kommunikationskanal in Verbindung steht.

8. Das Verfahren nach Anspruch 7, wobei Aktualisieren der Übertragungsleistungsinformation gemäß einer definierten Übertragungsrahmen-Zeitsteuerung, die mit dem Kommunikationskanal in Verbindung steht, umfasst Aktualisieren der Übertragungsleistungsinformation auf mindestens einer Basis pro Rahmen.

9. Das Verfahren nach Anspruch 1, wobei Überwachen von Übertragungsleistungsinformation für den Kommunikationskanal als eine Anzeige von aktuellen Funkbedingungen in dem entfernten Empfänger (14) Überwachen der Leistungssteuerbefehle umfasst.

10. Das Verfahren nach Anspruch 9, wobei Überwachen der Leistungssteuerbefehle umfasst Generieren von einem oder mehr gefilterten Werten der Leistungssteuerbefehle und Bestimmen, ob der eine oder mehr gefilterte Wert vorwiegend Aufwärtsbefehle anzeigt oder vorwiegend Abwärtsbefehle anzeigt.

11. Das Verfahren nach Anspruch 9, wobei Ändern der Datenrate für den Kommunikationskanal basierend auf dem Vergleich umfasst Initiieren einer Abwärtsdatenratenänderung, falls der eine oder mehr gefilterte Wert vorwiegend Aufwärtsbefehle anzeigt.

12. Das Verfahren nach Anspruch 9, wobei Ändern der Datenrate für den Kommunikationskanal basierend auf dem Vergleich umfasst Initiieren einer Aufwärtsdatenratenänderung, falls der eine oder mehr gefilterte Wert vorwiegend Abwärtsbefehle anzeigt.

13. Das Verfahren nach Anspruch 9, wobei Generieren von einem oder mehr gefilterten Werten der Leistungssteuerbefehle und Bestimmen, ob der eine oder mehr gefilterte Wert vorwiegend Aufwärtsbefehle oder vorwiegend Abwärtsbefehle anzeigt, umfasst Generieren eines ersten gefilterten Wertes gemäß einer ersten Filterzeitkonstante und Generieren eines zweiten gefilterten Wertes gemäß einer zweiten Filterzeitkonstante, und Basieren der Bestimmung von Abwärtsdatenratenänderungen auf dem ersten gefilterten Wert und Basieren der Bestimmung von Aufwärtsdatenratenänderungen auf dem zweiten gefilterten Wert.

14. Das Verfahren nach Anspruch 1, wobei das Netz (12) ein cdma2000-Netz umfasst und der Kommunikationskanal einen Vorwärtsverknüpfungszusatzkanal (F-SCH) in einer Funkbasisstation (32) in dem Netz (12) umfasst, was zum Bedienen einer bestimmten Mobilstation (14) zu verwenden ist, und wobei Ändern der Datenrate für den Kommunikationskanal basierend auf der Übertragungsleistungsinformation umfasst Senden einer Datenratenänderungsanforderung für den Vorwärtsverknüpfungszusatzkanal von der Funkbasisstation (32) zu einer zugehörigen Basisstationssteuervorrichtung (30).

15. Das Verfahren nach Anspruch 14, ferner umfassend Senden einer erweiterten Zusatzkanalzuweisungsnachricht von der Basisstationssteuervorrichtung (30) für eine Übertragung zu dem entfernten Empfänger (14), um den entfernten Empfänger (14) über eine Änderung in einer aktuellen Datenratenzuweisung des Vorwärtsverknüpfungszusatzkanals zu informieren.

16. Das Verfahren nach Anspruch 1, wobei die Übertragungsleistungsinformation umfasst eine Übertragungsleistung für den Kommunikationskanal, und wobei Überwachen von Übertragungsleistungsinformation für den Kommunikationskanal als eine Anzeige von aktuellen Funkbedingungen in dem entfernten Empfänger (14) umfasst Unterhalten von einem oder mehr gefilterten Werten, die die Übertragungsleistung anzeigen.

17. Das Verfahren nach Anspruch 16, wobei Ändern der Datenrate für den Kommunikationskanal basierend auf dem Vergleich umfasst Vergleichen des einen oder mehr gefilterten Wertes mit mindestens einer der ersten und zweiten Schwellen um zu bestimmen, ob eine Ratenänderung berechtigt ist.

18. Das Verfahren nach Anspruch 17, ferner umfassend Rücksetzen mindestens eines des einen oder mehr gefilterten Wertes reagierend auf Initiieren einer Datenratenerhöhung oder einer Datenratenverringerung.

19. Das Verfahren nach Anspruch 18, ferner umfassend, nach Initiieren einer Datenratenerhöhung basierend auf einem gefilterten Wert, Rücksetzen des gefilterten Wertes, um größer zu sein, als er es war, bevor die Datenratenerhöhung initiiert wurde.

20. Das Verfahren nach Anspruch 18, ferner umfassend, nach Initiieren einer Datenratenverringerung basierend auf einem gefilterten Wert, Rücksetzen des gefilterten Wertes, um kleiner zu sein, als er es war, bevor die Datenratenverringerung initiiert wurde.

21. Eine Funkbasisstation (32) zur Verwendung in einem drahtlosen Kommunikationsnetz (12), umfassend: Senderschaltungen (58), um Funksignale in einem oder mehr Vorwärtsverknüpfungs-Kommunikationskanälen zu Mobilstationen (14) zu übertragen; und
eine Vorwärtsverknüpfungs-Verarbeitungsschaltung (56), um die Senderschaltungen (58) zu steuern;
wobei die Vorwärtsverknüpfungs-Verarbeitungsschaltung (56) konfiguriert ist, eine Datenrate zu setzen für einen Kommunikationskanal, der zum Übertragen von Daten zu einer Mobilstation (14) in einer variablen Übertragungsleistung zu verwenden ist, wobei die variable Übertragungsleistung des Kommunikationskanals durch die Mobilstation (14) je nach Bedarf aufwärts und abwärts gesteuert wird basierend auf einer Qualität von empfangenen Daten für den Kommunikationskanal, um eine gewünschte Qualität von empfangenen Daten in der Mobilstation (14) zu erreichen; und
wobei die Vorwärtsverknüpfungs-Verarbeitungsschaltung (56) eine Ratenadapterschaltung (60) umfasst, die konfiguriert ist um:
Übertragungsleistungsinformation für den Kommunikationskanal als eine Anzeige von aktuellen Funkbedingungen in der Mobilstation (14) zu überwachen, wobei die Übertragungsleistungsinformation Leistungssteuerbefehle umfasst, die von dem entfernten Empfänger gesendet werden, die mit einer Steuerung der Übertragungsleistung des Kommunikationskanals in Verbindung stehen;
die Übertragungsleistungsinformation zu vergleichen gegenüber einer ersten Schwelle zum Bestimmen, ob eine Datenratenverringerung zu initiieren ist, und gegenüber einer zweiten Schwelle zum Bestimmen, ob eine Datenratenerhöhung zu initiieren ist; und
die Datenrate für den Kommunikationskanal basierend auf dem Vergleich zu ändern;
**gekennzeichnet durch** die Ratenadapterschaltung (60), die konfiguriert ist, einen ersten gefilterten Wert der Übertragungsleistungsinformation gemäß einer ersten Filterzeitkonstante für eine Verwendung bei einer Bestimmung zu generieren, ob eine Abwärtsdatenratenänderung zu initiieren ist, und einen zweiten gefilterten Wert der Übertragungsleistungsinformation gemäß einer zweiten längeren Filterzeitkonstante für eine Verwendung bei einer Bestimmung zu generieren, ob eine Aufwärtsdatenratenänderung zu initiieren ist.

22. Die Funkbasisstation (32) nach Anspruch 21, wobei die Funkbasisstation (32) konfiguriert ist, die Datenrate für den Kommunikationskanal auf einen gewünschten Wert zu setzen, und die Ratenadapterschaltung (60) konfiguriert ist, die Datenrate nach Bedarf basierend auf einer Überwachung der Übertragungsleistungsinformation anzupassen.

23. Die Funkbasisstation (32) nach Anspruch 21, wobei die Ratenadapterschaltung (60) umfasst eine oder mehr Filterschaltungen (64), um einen oder mehr gefilterte Werte bezogen auf Übertragungsleistung für den Kommunikationskanal als die Übertragungsleistungsinformation zu generieren.

24. Die Funkbasisstation (32) nach Anspruch 23, wobei die Ratenadapterschaltung (60) konfiguriert ist, mindestens einen des einen oder mehr gefilterten Wertes reagierend auf eine Initiierung einer Datenratenerhöhung oder einer Datenratenverringerung zurückzusetzen.

25. Die Funkbasisstation nach Anspruch 24, wobei, nach Initiieren einer Datenratenerhöhung basierend auf einem gefilterten Wert, die Ratenadapterschaltung (60) konfiguriert ist, den gefilterten Wert zurückzusetzen, um größer zu sein als er es war, bevor die Datenratenerhöhung initiiert wurde.

26. Die Funkbasisstation (32) nach Anspruch 24, wobei, nach Initiieren einer Datenratenverringerung basierend auf einem gefilterten Wert, die Ratenadapterschaltung (60) konfiguriert ist, den gefilterten Wert zurückzusetzen um kleiner zu sein als er es war, bevor die Datenratenverringerung initiiert wurde.

27. Die Funkbasisstation (32) nach Anspruch 23, wobei die Ratenadapterschaltung (60) konfiguriert ist, die Datenrate für den Kommunikationskanal zu ändern basierend auf der Übertragungsleistungsinformation durch Initiieren einer Abwärtsdatenratenänderung, falls sich einer des einen oder mehr gefilterten Wertes der ersten Schwelle annähert, und Initiieren einer Aufwärtsdatenratenänderung, falls sich einer des einen oder mehr gefilterten Wertes der zweiten Schwelle annähert.

28. Die Funkbasisstation (32) nach Anspruch 21, wobei die Übertragungsleistungsinformation eine Übertragungsleistung für den Kommunikationskanal umfasst, wobei die Ratenadapterschaltung (60) eine oder mehr Filterschaltungen (64) umfasst, um einen oder mehr gefilterte Werte der Übertragungsleistung für den Kommunikationskanal zu generieren, und wobei die Ratenadapterschaltung (60) konfiguriert ist, die Übertragungsleistungsinformation für den Kommunikationskanal durch Vergleichen des einen oder mehr gefilterten Wertes gegenüber den ersten und zweiten Schwellen zu überwachen.

29. Die Funkbasisstation (32) nach Anspruch 28, wobei die Ratenadapterschaltung (60) konfiguriert ist, die zweite Schwelle basierend auf einer Leistungsanforderung zu setzen, die mit einer höheren Datenrate in Verbindung steht, und ferner konfiguriert ist, eine Änderung zu der höheren Datenrate zu initiieren, falls der Vergleich anzeigt, dass ein ausreichender Leistungsspielraum für den Kommunikationskanal in der höheren Datenrate unterhalten würde.

30. Die Funkbasisstation (32) nach Anspruch 21, wobei die Übertragungsleistungsinformation eine Mittelwertübertragungsleistung für den Kommunikationskanal umfasst, und wobei die Ratenadapterschaltung (60) konfiguriert ist, die Übertragungsleistungsinformation für den Kommunikationskanal durch Vergleichen der Mittelwertübertragungsleistung mit oberen und unteren Leistungsgrenzen zu überwachen, die für den Kanal gesetzt sind.

31. Die Funkbasisstation (32) nach Anspruch 21, wobei die Ratenadapterschaltung (60) konfiguriert ist, die Übertragungsleistungsinformation gemäß einer definierten Übertragungsrahmenzeitsteuerung zu aktualisieren, die mit dem Kommunikationskanal in Verbindung steht.

32. Die Funkbasisstation (32) nach Anspruch 31, wobei die Ratenadapterschaltung (60) die Übertragungsleistungsinformation auf mindestens einer Basis pro Rahmen aktualisiert.

33. Die Funkbasisstation (32) nach Anspruch 21, wobei die Übertragungsleistungsinformation Leistungssteuerbefehle umfasst, die von der Mobilstation gesendet werden, die mit einer Steuerung der Übertragungsleistung des Kommunikationskanals in Verbindung stehen, und wobei die Ratenadapterschaltung (60) konfiguriert ist, Übertragungsleistungsinformation für den Kommunikationskanal durch Überwachen der Leistungssteuerbefehle zu überwachen.

34. Die Funkbasisstation (32) nach Anspruch 33, wobei die Ratenadapterschaltung (60) konfiguriert ist zu bestimmen, ob ein größerer Prozentsatz der Leistungssteuerbefehle Aufwärtsbefehle oder Abwärtsbefehle sind.

35. Die Funkbasisstation (32) nach Anspruch 34, wobei die Ratenadapterschaltung (60) konfiguriert ist, eine Abwärtsratenänderung zu initiieren, falls der größere Prozentsatz der Leistungssteuerbefehle Aufwärtsbefehle sind, und eine Aufwärtsratenänderung zu initiieren, falls der größere Prozentsatz der Leistungssteuerbefehle Abwärtsbefehle sind.

36. Die Funkbasisstation (32) nach Anspruch 33, wobei die Ratenadapterschaltung (60) konfiguriert ist, die Leistungssteuerbefehle gemäß einer ersten Filterzeitkonstante zu filtern um zu bestimmen, ob eine Abwärtsratenänderung zu initiieren ist, und konfiguriert ist die Leistungssteuerbefehle gemäß einer zweiten längeren Filterzeitkonstante zu filtern um zu bestimmen, ob eine Aufwärtsratenänderung zu initiieren ist.

37. Die Funkbasisstation (32) nach Anspruch 33, wobei die Ratenadapterschaltung konfiguriert ist, eine Abwärtsratenänderung zu initiieren, falls die Leistungssteuerbefehle vorwiegend Aufwärtsbefehle sind, und eine Aufwärtsratenänderung zu initiieren, falls die Leistungssteuerbefehle vorwiegend Abwärtsbefehle sind.

38. Die Funkbasisstation nach Anspruch 21, wobei die Funkbasisstation umfasst eine IS-2000-Funkbasisstation zur Verwendung in einem cdm2000-Drahtloskommunikationsnetz, und der Kommunikationskanal einen Vorwärtsverknüpfungszusatzkanal (F-SCH) umfasst, der zum Bedienen einer bestimmten Mobilstation zu verwenden ist, und wobei die Funkbasisstation konfiguriert ist, die Datenrate durch Senden einer Ratenänderungsanforderung für den Vorwärtsverknüpfungszusatzkanal zu einer zugehörigen Basisstationssteuervorrichtung zu ändern.

39. Die Funkbasisstation nach Anspruch 38, wobei die Basisstationssteuervorrichtung konfiguriert ist, eine erweiterte Zusatzkanalzuweisungsnachricht für eine Übertragung zu der Mobilstation zu senden, um die Mobilstation über eine geänderte Datenratenzuweisung für den Vorwärtsverknüpfungszusatzkanal zu informieren.

## Revendications

1. Procédé de gestion d'un canal de réseau de communication sans fil ayant un débit de données variable, le procédé comprenant les étapes consistant à :
fixer un débit de données pour un canal de communication, à utiliser pour émettre des données vers un récepteur distant (14) avec une puissance d'émission variable, la puissance d'émission variable du canal de communication étant commandée en hausse et en baisse par le récepteur distant (14) suivant les besoins, sur la base de la qualité des données reçues, afin que le canal de communication atteigne une qualité voulue des données reçues au niveau du récepteur distant ;
surveiller (102) des informations de puissance d'émission pour le canal de communication, comme constituant une indication des conditions radio courantes au niveau du récepteur distant, les informations de puissance d'émission comprenant des instructions de commande de la puissance émises par le récepteur distant et associées à la commande de la puissance d'émission pour le canal de communication ;
comparer (104) les informations de puissance d'émission avec un premier seuil afin de décider s'il faut lancer une diminution du débit de données et (110) avec un second seuil afin de décider s'il faut lancer une augmentation du débit de données ; et
modifier (108, 114) le débit de données pour le canal de communication en fonction de la comparaison ;
**caractérisé par** la production d'une première valeur filtrée des informations de puissance d'émission à utiliser pour décider de lancer une modification du débit de données en baisse et par la production d'une seconde valeur filtrée des informations de puissance d'émission à utiliser pour décider de lancer une modification du débit de données en hausse, et comprenant en outre l'utilisation d'une constante de temps de filtrage plus longue pour produire la seconde valeur filtrée, par comparaison avec la première valeur filtrée.

2. Procédé selon la revendication 1, dans lequel la fixation d'un débit de données pour un canal de communication, à utiliser pour l'émission de données vers un récepteur distant à une puissance d'émission variable, comprend le fait de fixer à un débit de données voulu le débit de données pour le canal de communication attribué au récepteur distant.

3. Procédé selon la revendication 1, dans lequel les informations de puissance d'émission comprennent une puissance d'émission pour le canal de communication, et dans lequel la surveillance des informations de puissance d'émission pour le canal de communication comme constituant une indication des conditions radio courantes au niveau du récepteur distant comprend la production d'une ou plusieurs valeurs filtrées de la puissance d'émission et la surveillance desdites une ou plusieurs valeurs filtrées comme constituant une indication des conditions radio courantes au niveau du récepteur distant.

4. Procédé selon la revendication 3, dans lequel la modification du débit de données pour le canal de communication en fonction de la comparaison comprend le lancement d'une modification du débit en baisse si l'une desdites une ou plusieurs valeurs filtrées approche du premier seuil et le lancement d'une modification du débit de données en hausse si l'une desdites une ou plusieurs valeurs filtrées approche du second seuil.

5. Procédé selon la revendication 1, dans lequel le second seuil est constitué d'un seuil fixé par rapport à une limite supérieure de puissance associée à un débit de données supérieur, si bien qu'une modification vers ce débit de données supérieur n'est pas lancée à moins que la comparaison indique qu'une marge de puissance voulue existerait si le débit de données était porté au débit de données supérieur.

6. Procédé selon la revendication 1, dans lequel les informations de puissance d'émission comprennent une moyenne de la puissance d'émission pour le canal de communication, dans lequel la surveillance des informations de puissance d'émission pour le canal de communication comme constituant une indication des conditions radio courantes au niveau du récepteur distant comprend le fait de comparer (106, 112) la puissance d'émission moyenne utilisée pour l'émission de données sur le canal de communication avec les premier et second seuils, et dans lequel une puissance moyenne élevée indique des conditions radio courantes relativement mauvaises au niveau du terminal distant (14), et dans lequel une puissance moyenne basse indique des conditions radio courantes relativement bonnes au niveau du terminal distant (14).

7. Procédé selon la revendication 1, comprenant en outre la mise à jour des informations de puissance d'émission sur la base d'un cadençage défini des trames d'émission, associé au canal de communication.

8. Procédé selon la revendication 7, dans lequel la mise à jour des informations de puissance d'émission sur la base d'un cadençage défini des trames d'émission, associé au canal de communication, comprend la mise à jour des informations de puissance d'émission au moins trame par trame.

9. Procédé selon la revendication 1, dans lequel la surveillance des informations de puissance d'émission pour le canal de communication comme constituant une indication des conditions radio courantes au niveau du récepteur distant (14) comprend la surveillance des instructions de commande de la puissance.

10. Procédé selon la revendication 9, dans lequel la surveillance des instructions de commande de la puissance comprend le fait de produire une ou plusieurs valeurs filtrées des instructions de commande de la puissance et de décider si lesdites une ou plusieurs valeurs filtrées indiquent de manière prédominante des instructions de hausse ou indiquent de manière prédominante des instructions de baisse.

11. Procédé selon la revendication 9, dans lequel la modification du débit de données pour le canal de communication en fonction de la comparaison comprend le lancement d'une modification du débit de données en baisse si lesdites une ou plusieurs valeurs filtrées indiquent de manière prédominante des instructions de hausse.

12. Procédé selon la revendication 9, dans lequel la modification du débit de données pour le canal de communication en fonction de la comparaison comprend le lancement d'une modification du débit de données en hausse si lesdites une ou plusieurs valeurs filtrées indiquent de manière prédominante des instructions de baisse.

13. Procédé selon la revendication 9, dans lequel le fait de produire une ou plusieurs valeurs filtrées à partir des instructions de commande de la puissance et de décider si lesdites une ou plusieurs valeurs filtrées indiquent de manière prédominante des instructions de hausse ou indiquent de manière prédominante des instructions de baisse comprend le fait de produire une première valeur filtrée d'après une première constante de temps de filtrage et de produire une seconde valeur filtrée d'après une seconde constante de temps de filtrage, et de fonder la décision de modifications du débit de données en baisse sur la première valeur filtrée et de fonder la décision de modifications du débit de données en hausse sur la seconde valeur filtrée.

14. Procédé selon la revendication 1, dans lequel le réseau (12) est constitué d'un réseau cdma2000 et le canal de communication est constitué d'un canal supplémentaire de liaison directe (F-SCH) au niveau d'une station de base radio (32) du réseau (12), à utiliser pour desservir une station mobile particulière (14), et dans lequel la modification du débit de données pour le canal de communication en fonction des informations de puissance d'émission comprend l'envoi d'une demande de modification du débit de données pour le canal supplémentaire de liaison directe à partir de la station de base radio (32) et vers un dispositif de commande de stations de base (30) associé.

15. Procédé selon la revendication 14, comprenant en outre l'envoi d'un message d'attribution de canal supplémentaire étendu à partir du dispositif de commande de stations de base (30), pour émission vers le récepteur distant (14), afin d'informer le récepteur distant (14) d'un changement dans une attribution du débit de données courant du canal supplémentaire de liaison directe.

16. Procédé selon la revendication 1, dans lequel les informations de puissance d'émission comprennent une puissance d'émission pour le canal de communication, et dans lequel la surveillance des informations de puissance d'émission pour le canal de communication comme constituant une indication des conditions radio courantes au niveau du récepteur distant (14) comprend la maintenance d'une ou plusieurs valeurs filtrées indicatrices de la puissance d'émission.

17. Procédé selon la revendication 16, dans lequel la modification du débit de données pour le canal de communication en fonction de la comparaison comprend une comparaison desdites une ou plusieurs valeurs filtrées avec au moins un desdits premier et second seuils afin de déterminer si une modification du débit est nécessaire.

18. Procédé selon la revendication 17, comprenant en outre la réinitialisation d'au moins une desdites une ou plusieurs valeurs filtrées en réponse au lancement d'une augmentation du débit de données ou d'une diminution du débit de données.

19. Procédé selon la revendication 18, comprenant en outre, après le lancement d'une augmentation du débit de données sur la base d'une valeur filtrée, la réinitialisation de la valeur filtrée à une valeur supérieure à ce qu'elle était avant le lancement de l'augmentation du débit de données.

20. Procédé selon la revendication 18, comprenant en outre, après le lancement d'une diminution du débit de données sur la base d'une valeur filtrée, la réinitialisation de la valeur filtrée à une valeur inférieure à ce qu'elle était avant le lancement de la diminution du débit de données.

21. Station de base radio (32) destinée à être utilisée dans un réseau de communication sans fil (12), comprenant :
des circuits d'émission (58) destinés à émettre des signaux radio sur un ou plusieurs canaux de communication de liaison directe vers des stations mobiles (14) ; et
un circuit de traitement de la liaison directe (56) destiné à commander les circuits d'émission (58) ;
ledit circuit de traitement de la liaison directe (56) étant configuré pour paramétrer un débit de données d'un canal de communication à utiliser pour l'émission de données vers une station mobile (14) avec une puissance d'émission variable, la puissance d'émission variable du canal de communication étant commandée en hausse et en baisse par la station mobile (14) en fonction des besoins sur la base de la qualité des données reçues, afin que le canal de communication atteigne une qualité voulue des données reçues au niveau de la station mobile (14) ; et
ledit circuit de traitement de la liaison directe (56) comprenant un circuit d'adaptation du débit (60) configuré afin de :
surveiller des informations de puissance d'émission pour le canal de communication, comme constituant une indication des conditions radio courantes au niveau de la station mobile (14), les informations de puissance d'émission comprenant des instructions de commande de la puissance émises par le récepteur distant et associées à la commande de la puissance d'émission pour le canal de communication;
comparer les informations de puissance d'émission avec un premier seuil afin de décider s'il faut lancer une diminution du débit de données et avec un second seuil afin de décider s'il faut lancer une augmentation du débit de données ; et
modifier le débit de données pour le canal de communication en fonction de la comparaison ;
**caractérisée par le fait que** le circuit d'adaptation du débit (60) est configuré pour produire une première valeur filtrée des informations de puissance d'émission, en fonction d'une première constante de temps de filtrage, afin de l'utiliser pour décider de lancer une modification du débit de données en baisse et pour produire une seconde valeur filtrée des informations de puissance d'émission, en fonction d'une seconde constante de temps de filtrage, plus longue, afin de l'utiliser pour décider de lancer une modification du débit de données en hausse.

22. Station de base radio (32) selon la revendication 21, dans laquelle la station de base radio (32) est configurée pour paramétrer le débit de données pour le canal de communication à une valeur voulue et le circuit d'adaptation du débit (60) est configuré pour adapter le débit de données en fonction des besoins, sur la base de la surveillance des informations de puissance d'émission.

23. Station de base radio (32) selon la revendication 21, dans laquelle le circuit d'adaptation du débit (60) comprend un ou plusieurs circuits de filtrage (64) destinés à produire une ou plusieurs valeurs filtrées liées à la puissance d'émission pour le canal de communication constituant les informations de puissance d'émission.

24. Station de base radio (32) selon la revendication 23, dans laquelle le circuit d'adaptation du débit (60) est configuré pour réinitialiser au moins l'une desdites une ou plusieurs valeurs filtrées en réponse au lancement d'une augmentation du débit de données ou d'une diminution du débit de données.

25. Station de base radio selon la revendication 24, dans laquelle, après le lancement d'une augmentation du débit de données sur la base d'une valeur filtrée, le circuit d'adaptation du débit (60) est configuré pour réinitialiser la valeur filtrée à une valeur supérieure à ce qu'elle était avant le lancement de l'augmentation du débit de données.

26. Station de base radio (32) selon la revendication 24, dans laquelle, après le lancement d'une diminution du débit de données sur la base d'une valeur filtrée, le circuit d'adaptation du débit (60) est configuré pour réinitialiser la valeur filtrée à une valeur inférieure à ce qu'elle était avant le lancement de la diminution du débit de données.

27. Station de base radio (32) selon la revendication 23, dans laquelle le circuit d'adaptation du débit (60) est configuré pour modifier le débit de données pour le canal de communication en fonction des informations de puissance d'émission en lançant une modification du débit de données en baisse si l'une desdites une ou plusieurs valeurs filtrées approche du premier seuil et en lançant une modification du débit de données en hausse si l'une desdites une ou plusieurs valeurs filtrées approche du second seuil.

28. Station de base radio (32) selon la revendication 21, dans laquelle les informations de puissance d'émission comprennent une puissance d'émission pour le canal de communication, dans laquelle le circuit d'adaptation du débit (60) comprend un ou plusieurs circuits de filtrage (64) destinés à produire une ou plusieurs valeurs filtrées de la puissance d'émission pour le canal de communication, et dans laquelle le circuit d'adaptation du débit (60) est configuré pour surveiller les informations de puissance d'émission pour le canal de communication en comparant lesdites une ou plusieurs valeurs filtrées avec les premier et second seuils.

29. Station de base radio (32) selon la revendication 28, dans laquelle le circuit d'adaptation du débit (60) est configuré pour fixer le second seuil en fonction d'une exigence de puissance associée à un débit de données supérieur et est en outre configuré pour lancer une modification dans le sens du débit de données supérieur si la comparaison indique qu'une marge de puissance suffisante serait assurée pour le canal de communication au débit de données supérieur.

30. Station de base radio (32) selon la revendication 21, dans laquelle les informations de puissance d'émission comprennent une puissance d'émission moyenne pour le canal de communication, et dans laquelle le circuit d'adaptation du débit (60) est configuré pour surveiller les informations de puissance d'émission pour le canal de communication en comparant la puissance d'émission moyenne avec des limites de puissance inférieure et supérieure fixées pour le canal.

31. Station de base radio (32) selon la revendication 21, dans laquelle le circuit d'adaptation du débit (60) est configuré pour mettre à jour les informations de puissance d'émission sur la base d'un cadençage défini des trames d'émission, associé au canal de communication.

32. Station de base radio (32) selon la revendication 31, dans laquelle le circuit d'adaptation du débit (60) met à jour les informations de puissance d'émission au moins trame par trame.

33. Station de base radio (32) selon la revendication 21, dans laquelle les informations de puissance d'émission comprennent des instructions de commande de la puissance émises par la station mobile et associées à la commande de la puissance d'émission pour le canal de communication, et dans laquelle le circuit d'adaptation du débit (60) est configuré pour surveiller les informations de puissance d'émission pour le canal de communication en surveillant les instructions de commande de la puissance.

34. Station de base radio (32) selon la revendication 33, dans laquelle le circuit d'adaptation du débit (60) est configuré pour déterminer si un pourcentage supérieur des instructions de commande de la puissance est constitué des instructions de hausse ou des instructions de baisse.

35. Station de base radio (32) selon la revendication 34, dans laquelle le circuit d'adaptation du débit (60) est configuré pour lancer une modification du débit en baisse si le pourcentage supérieur des instructions de commande de la puissance est composé d'instructions de hausse et pour lancer une modification du débit en hausse si le pourcentage supérieur des instructions de commande de la puissance est composé d'instructions de baisse.

36. Station de base radio (32) selon la revendication 33, dans laquelle le circuit d'adaptation du débit (60) est configuré pour filtrer les instructions de commande de la puissance d'après une première constante de temps de filtrage afin de décider de lancer une modification du débit en baisse et est configuré pour filtrer les instructions de commande de la puissance d'après une seconde constante de temps de filtrage, plus longue, afin de décider de lancer une modification du débit en hausse.

37. Station de base radio (32) selon la revendication 33, dans laquelle le circuit d'adaptation du débit est configuré pour lancer une modification du débit en baisse si les instructions de commande de la puissance sont de manière prédominante des instructions de hausse et pour lancer une modification du débit en hausse si les instructions de commande de la puissance sont de manière prédominante des instructions de baisse.

38. Station de base radio selon la revendication 21, dans laquelle la station de base radio est constituée d'une station de base radio IS-2000 destinée à être utilisée dans un réseau de communication sans fil cdma2000, dans laquelle le canal de communication est constitué d'un canal supplémentaire de liaison directe (F-SCH), à utiliser pour desservir une station mobile particulière, et dans laquelle la station de base radio est configurée pour modifier le débit de données en envoyant une demande de modification du débit pour le canal supplémentaire de liaison directe à un dispositif de commande de stations de base associé.

39. Station de base radio selon la revendication 38, dans laquelle le dispositif de commande de stations de base est configuré pour envoyer un message d'attribution de canal supplémentaire étendu, pour être émis vers la station mobile, afin d'informer la station mobile d'un changement d'une attribution du débit de données pour le canal supplémentaire de liaison directe.
